# EUROPÄISCHE PATENTANMELDUNG

(11) **EP 3 895 967 A1**
(43) Veröffentlichungstag der Anmeldung: **20.10.2021**
(21) Anmeldenummer: 21168725.6
(22) Anmeldetag: 15.04.2021
(51) Int. Cl.: B62K 27/12

(54) **MULTIFUNKTIONSPLATTFORM**

(30) Priorität: 15.04.2020 DE 202020102085 U
(71) Anmelder: Croozer GmbH, 50354 Hürth (DE)
(72) Erfinder: Gehlen, Andreas, 50829 Köln (DE)
(74) Vertreter: Lenzing Gerber Stute

(57) **Zusammenfassung**

Die Erfindung betrifft einen Anhänger für ein unmotorisiertes oder mit einem Hilfsmotor angetriebenes Zugfahrzeug, insbesondere für ein Fahrrad oder ein Pedelec, mit einem Chassis und mindestens einem sich mindestens quer zur Längsachse des Anhängers erstreckenden Funktionsmodul, das mindestens einen Träger aufweist, wobei Verankerungselemente zur lösbaren ortsfesten Verankerung des Funktionsmoduls am Chassis vorgesehen sind. Um die Nutzbarkeit eines solchen Anhängers zu verbessern, sind die Verankerungselemente so angeordnet und ausgebildet, dass sie ein lösbares Befestigen eines oder mehrerer voneinander unabhängiger Funktionsmodule (81, 82) an unterschiedlichen Positionen am Chassis ermöglichen, wobei mindestens eines, vorzugsweise mindestens zwei der Verankerungselemente zwischen einem rechten und einem linken inneren Rand des Chassis angeordnet sind.

## Beschreibung

Die vorliegende Erfindung betrifft einen Anhänger für ein unmotorisiertes oder mit einem Hilfsmotor angetriebenes Zugfahrzeug, insbesondere für ein Fahrrad oder ein Pedelec, mit einem Chassis und mindestens einem sich mindestens quer zur Längsachse des Anhängers erstreckenden Funktionsmodul, das mindestens einen Träger aufweist, wobei Verankerungselemente zur lösbaren ortsfesten Verankerung des Funktionsmoduls am Chassis vorgesehen sind.

Fahrradanhänger erfreuen sich zunehmender Beliebtheit. Es gibt Kinderfahrradanhänger, die ein Chassis und eine Fahrgastzelle aufweisen, in der je nach Größe des Anhängers ein Einzelsitz oder ein Doppelsitz zum Transport eines oder zweier Kinder vorgesehen ist. Das Chassis wird üblicherweise durch eine Rahmenkonstruktion gebildet, an die eine faltbare, die Fahrgastzelle bildende Rahmenkonstruktion montiert ist, wobei die gesamte aus den beiden Rahmenkonstruktionen gebildete Rahmenstruktur von einem oder mehreren flexiblen Stoffen oder Folien umspannt ist. Bei manchen Fahrradanhängern wird das Chassis durch eine Kunststoff- oder Aluminiumschale gebildet, auf die eine ebenso zumeist faltbare und von einem flexiblen Material umspannte Rahmenkonstruktion für die Fahrgastzelle aufgesetzt ist. Die Sitze sind beispielsweise als Tuchsitze ausgebildet und in der Fahrgastzelle verspannt, oder sie sind als Schalensitze ausgebildet und seitlich in der Fahrgastzelle verankert. Es gibt auch Fahrradanhänger zum Transport von Hunden, bei denen die Fahrgastzelle eine hundegerechte Form hat. Zudem gibt es auch Transportanhänger, die eine Ladefläche zum Aufnehmen von Lasten, aber keine Fahrgastzelle haben. Allen diesen Anhängern ist gemeinsam, dass sie vergleichsweise leicht gebaut sind und ein Verhältnis von aufnehmbarer Last zu Eigengewicht von deutlich mehr als 2 haben.

Aus der deutschen Gebrauchsmusterschrift DE 92 15 797.1 ist ein Lastenanhänger für Fahrräder mit den Merkmalen des Oberbegriffs bekannt. Er weist eine Ladefläche sowie seitliche, die Ladefläche eingrenzende Wandungen auf. In den durch die Seitenwandungen gebildeten Ecken sind Verankerungen vorgesehen, in denen ein sogenannter Überrollbügel lösbar befestigt werden kann. Am Überrollbügel sind verschiedene Befestigungspunkte vorgesehen derart, dass ein Kindersitz in den Überrollbügel eingehängt werden kann, wobei die Position der Rückenlehne zur Sitzfläche des Kindersitzes einstellbar ist.

Eine Aufgabe der Erfindung besteht darin, einen Anhänger mit einer verbesserten Nutzbarkeit zu schaffen.

Diese Aufgabe wird dadurch gelöst, dass die Verankerungselemente so angeordnet und ausgebildet sind, dass sie ein lösbares Befestigen eines oder mehrerer voneinander unabhängiger Funktionsmodule an unterschiedlichen Positionen am Chassis ermöglichen, wobei mindestens eines, vorzugsweise mindestens zwei der Verankerungselemente zwischen einem rechten und einem linken inneren Rand des Chassis angeordnet sind.

Unter einem Chassis wird hier und im Folgenden der Teil der Anhängerstruktur verstanden, die eine Fahrgastzelle oder eine etwaige Wandstruktur des Anhängers trägt. Am Chassis ist die Radaufhängung befestigt, und es umfasst in Fahrposition des Anhängers gegebenenfalls feste, formgebende Strukturelemente, die sich unterhalb der Befestigung der Radaufhängung befinden. Die Radaufhängung kann dabei eine einfache Achsaufnahme oder aber auch, soweit vorhanden, eine gefederte Aufhängung sein. Das Chassis kann beispielsweise aus einer Rahmenstruktur, insbesondere einer Rohrrahmenstruktur bestehen, an der eine Rahmenstruktur für eine Fahrgastzelle befestigt ist. Das Chassis kann beispielsweise auch eine insbesondere einstückige Kunststoff- oder Metallplatte bzw. -wanne sein.

Die Begriffe Fahrtrichtung und Längsachse des Fahrradanhängers werden hier und im Folgenden synonym verwendet.

Dadurch, dass eines oder mehrere voneinander unabhängige Funktionsmodule über Verankerungselemente am Fahrradanhänger befestigt werden können, wird es erstmalig möglich, Fahrradanhänger an den jeweiligen Anwendungsbedarf anzupassen, indem entweder eins, mehrere oder gar kein Funktionsmodul verwendet wird. So ist es beispielsweise möglich, dass ein erfindungsgemäßer Anhänger als einfacher Lastenanhänger verwendet werden kann, oder aber mit einem oder mehreren Einzelsitzen, wobei beispielsweise bei Verwendung eines Sitzes dieser quer zur Fahrtrichtung des Fahrradanhängers gesehen in der Mitte des Anhängers positioniert werden kann, während bei Verwendung von zwei Sitzen diese dann nebeneinander angeordnet werden können, oder, wenn die Anordnung der Verankerungspunkte und die Länge des Anhängers es erlaubt, auch hintereinander, quer zur Fahrrichtung gesehen entweder mittig oder auch an einer Seite des Anhängers, so dass die andere Seite des Anhängers beispielsweise als Laderaum dient.

Mit der Anordnung und Ausbildung der Verankerungselemente wird also eine Möglichkeit eines modularen Aufbaus eines Fahrradanhängers geschaffen, der eine gegenüber den vorbekannten Anhängern deutlich vielseitigere Verwendung eines Anhängers ermöglicht.

In einer bevorzugten Ausführungsform der Erfindung sind die Verankerungselemente derart angeordnet, dass sie ein lösbares Befestigen eines oder mehrerer voneinander unabhängiger Funktionsmodule an unterschiedlichen Positionen quer zur Längsachse des Chassis ermöglichen, beispielsweise wahlweise seitlich oder in der Mitte des Fahrradanhängers, wobei es insbesondere von Vorteil ist, wenn ein Verankern von zwei voneinander unabhängigen Funktionsmodulen im Chassis nebeneinander möglich ist. Alternativ kann es ebenso von Vorteil sein, wenn zwei Funktionsmodule am Chassis hintereinander verankert werden können.

Dabei ist es sinnvoll, wenn mindestens drei in einer Richtung quer zur Längsachse des Anhängers voneinander beabstandete Verankerungselemente vorgesehen sind. Dadurch wird es beispielsweise möglich, ein Funktionsmodul an in Querrichtung verschiedenen Positionen zu verankern oder zwei voneinander unabhängige Funktionsmodule nebeneinander zu positionieren. Dies schließt nicht aus, ist aber weniger bevorzugt, dass eines oder mehrere der Verankerungselemente an einem seitlichen Teil des Chassis angeordnet sind.

Es ist weniger sinnvoll, aber ebenso wenig ausgeschlossen, Verankerungselemente am in Fahrtrichtung vorderen oder hinteren Ende des Chassis vorzusehen. Dennoch sollten Verankerungselemente in einem Bereich zwischen dem vorderen Ende und dem hinteren Ende des Chassis vorgesehen sein, insbesondere in einem Bereich, der von dem vorderen und dem hinteren Ende des Chassis um 1/10 der Länge des Anhängers beabstandet ist.

Vorzugsweise ist mindestens eines der Verankerungselemente auf Höhe eines Bodens des Chassis angeordnet. Das hat den besonderen Vorteil, dass die Funktionsmodule und damit verbundene Lasten möglichst tief im Anhänger angeordnet und befestigt werden können, was die Fahrstabilität des Anhängers erhöht.

Des Weiteren ist es von Vorteil, wenn ein Verankerungselement mindestens ein Chassis-seitiges und mindestens ein Funktionsmodul-seitiges Kupplungselement aufweist, die aufeinander abgestimmt sind und eine feste Verankerung eines Funktionsmoduls ermöglichen. Ein spezifisches Chassis-seitiges Funktionselement muss allerdings nicht zwingend vorgesehen sein. So ist es denkbar und möglich, dass ein Verankerungselement lediglich aus einem Funktionsmodul-seitigen Kupplungselement besteht, das so ausgebildet ist, dass es ortsfest und sicher mit einem Strukturelement des Chassis, beispielsweise eine Querstrebe zwischen zwei seitlichen Rahmenrohren des Chassis, verbunden werden kann, indem das Funktionsmodul-seitige Kupplungselement an der Querstrebe festgeklemmt wird.

In der Handhabung einfach ist es, wenn ein Verankerungselement als Steckkupplung mit einem Chassis-seitigen und einem Funktionsmodul-seitigen Kupplungselement ausgebildet ist. Als Steckkupplungen sind beispielsweise Camloc-Verschlüsse geeignet.

Die Chassis-seitigen Kupplungselemente können an Strukturelementen des Chassis, insbesondere an tragenden Streben oder Rohren des Chassis, befestigt sein. Es ist aber ebenso von Vorteil, wenn eine ein- oder mehrteilige Bodenplatte am Chassis vorgesehen ist, an bzw. in der mindestens ein Chassis-seitiges Kupplungselement angeordnet und insbesondere verankert ist. Werden eine oder mehrere Bodenplatten verwendet, die ausreichend tragfähig sind, gibt es eine größere Fläche, über die die Verankerungselemente am Chassis positioniert werden können. Bodenplatten haben zudem den Vorteil, dass mit ihnen eine tragfähige und ebene Ladefläche gebildet werden kann. Vorzugsweise ist die ein- oder mehrteilige Bodenplatte am Chassis, insbesondere mithilfe von Kupplungsstiften oder Rastmitteln, lösbar befestigt

Insbesondere in dem Fall, in dem eine Bodenplatte zum Abschluss der Fahrgastzelle nach unten vorgesehen ist, die Bodenplatte aber nicht für eine sichere Aufnahme der Lasten eines Chassis-seitigen Kupplungselements ausreichend ist, kann eine am Chassis befestigte, insbesondere quer zur Längsachse des Anhängers verlaufende Schiene als Chassis-seitiges Kupplungselement, insbesondere eine Profilschiene, vorgesehen sein, die mit einem bzw. mehreren Funktionsmodul-seitigen Kupplungselementen eines oder mehrerer Funktionsmodule zusammenwirken kann. Eine solche Profilschiene ist mit Vorsprüngen oder Nuten mit Hinterschnitten versehen, in die ein Funktionsmodul-seitiges Kupplungselement eingreifen kann, um eine feste Verbindung der Kupplungsteile herzustellen. Eine solche Schiene hat zudem den Vorteil, dass sie als Gegenlager für mehrere Funktionsmodul-seitige Kupplungselemente dienen kann.

Aus Anwendersicht ist es besonders vorteilhaft, wenn die Verankerungselemente das Verankern eines Funktionsmoduls im Wesentlichen von oben ermöglichen, wenn also die Funktionsmodule durch eine Bewegung von oben nach unten in die Position gebracht werden können, in der sie dann am Anhänger gesichert werden.

In einer einfachen Ausbildung weist ein Funktionsmodul einen mit einem Verankerungselement verbundenen Pfosten auf. Ein solcher Pfosten kann allein oder in Verbindung mit weiteren Pfosten eine Stütze eines Funktionsmoduls sein. Beispielsweise kann der Pfosten alleine oder in Verbindung mit anderen Pfosten einen sich quer zur Längsrichtung erstreckenden Träger eines Funktionsmoduls stützen, der insbesondere Bestandteil eines Rahmens des Funktionsmoduls sein kann.

So kann eine sich selbst tragende Körperaufnahme für ein Kind bzw. ein Baby Bestandteil eines Funktionsmoduls sein, dass auf die Pfosten oder auf einen von den Pfosten gehaltenen Träger aufgesetzt wird, wobei die Körperaufnahme vorzugsweise einen Rahmen aufweist, der im Übergang zwischen einer Rumpfstütze und einer Sitzfläche mit einem oder mehreren gegebenenfalls feststellbaren Gelenken ausgebildet ist.

In einer weiteren bevorzugten erfindungsgemäßen Ausführungsform kann ein Funktionsmodul mindestens ein Teil einer im Anhänger verspannten Körperaufnahme für ein Kind und/oder ein Baby sein und insbesondere mindestens ein Rahmenelement für die Sitzfläche des Sitzes aufweisen. So kann die Sitzfläche über zwei in Fahrtrichtung vordere, quer zueinander beabstandete Pfosten, die einen ersten Querträger tragen, und zwei in Fahrtrichtung hintere, quer zueinander beabstandete Pfosten, die einen zweiten Querträger tragen, definiert werden, wobei eine flexible Matte zwischen dem ersten und zweiten Querträger verspannt ist, am zweiten Querträger in eine Rückenlehne (bzw. Rumpfstütze) übergeht und an einem oberen Teil des Rahmens der Fahrgastzelle nach oben verspannt ist. Sofern am Chassis in Längsrichtung verschiedene Möglichkeiten vorgesehen sind, die vorderen Pfosten und/oder die hinteren Pfosten mit ihren Verankerungselementen zu verankern, kann durch geeignete Anordnung der Pfosten sowohl die Lage und Länge der Sitzfläche als auch die Neigung der Rückenlehne an den jeweiligen Bedarf angepasst werden. Sind die vorderen und hinteren Pfosten in ihrer Höhe verstellbar, ist es zudem möglich die Neigung der Rückenlehne in Bezug zur Sitzfläche einzustellen.

Während bei der vorstehend genannten Ausführungsform nur die Rückenlehne der Körperaufnahme im Anhänger verspannt ist, ist es ebenso möglich und bevorzugt, dass das Funktionsmodul Bestandteil einer Körperaufnahme für ein Kind und/oder ein Baby ist, die vollständig im Anhänger verspannt ist, wobei das Funktionsmodul dann wiederum mindestens ein Rahmenelement für eine Sitzfläche der Körperaufnahme aufweist. So kann beispielsweise ein Rahmenelement ein an mindestens einer Stütze gehaltener Querträger sein, wobei die mindestens eine Stütze teleskopierbar und/oder um eine horizontale, quer zur Längsrichtung des Anhängers verlaufende Achse schwenkbar ist. Dieser Querträger kann als Vorderkante der Sitzfläche der Körperaufnahme dienen und wäre dann in seiner Lage veränderbar. Wird die Stützfläche der Körperaufnahme durch eine flexible Matte gebildet, kann die Matte zum einen in einem Bereich, in dem die Sitzfläche in die Rückenlehne übergeht, nach hinten über einen oder mehrere geeignete Spannelemente wie beispielsweise längenverstellbare Gurte am Rahmen der Fahrgastzelle bzw. dem Chassis und zum anderen das obere Ende der Rückenlehne in einer Richtung nach oben an der Fahrgastzelle, ggf. ebenso unter Einsatz von geeigneten Spannelementen wie beispielsweise längenverstellbaren Gurten, verspannt werden. Bei einer derartigen Verspannung wäre der Querträger des Funktionsmoduls nach unten zu verspannen. Bei einer derartigen Konstruktion ist es auf einfache Weise möglich, verschiedene Sitzpositionen einzustellen, beispielsweise eine Sitzposition mit einer überwiegend aufrechten Rückenlehne für Kinder ebenso wie eine Liegesitzposition zum Transport von Babys. Ist die mindestens eine Stütze für den Querträger teleskopierbar, kann die Länge der Sitzfläche der Körperaufnahme variabel sein. Dazu kann beispielsweise, wenn die Länge der Sitzfläche kurz ist, überschüssiges, für die Sitzfläche zur Verfügung stehendes Material der Matte über den Querträger nach unten bzw. nach hinten geführt und an einem dafür geeigneten Gegenlager abgespannt sein.

Ein Querträger mit ggf. verschwenkbarer Stütze kann auch zur Definition der Lage des Übergangs zwischen Sitzfläche und Rückenlehne der Körperaufnahme dienen. Er könnte auch in Verbindung mit einem oder mehreren Pfosten, die einen Querträger für die vordere Kante der Sitzfläche stützen, kombiniert werden.

In Ergänzung zu den Verankerungselementen ist am erfindungsgemäßen Anhänger vorzugsweise mindestens ein auf Höhe des Bodens des Chassis angeordneter Steg als Gegenlager für Abspanngurte zum Verspannen von Funktionsmodulen vorgesehen. Beispielsweise können mehrere solcher Stege in parallelen Reihen hintereinander in einer Bodenfläche des Chassis verteilt sein. Sie können beispielsweise als Gegenlager zum Verspannen der oben beschriebenen Körperaufnahmen dienen.

In einer anderen erfindungsgemäßen Alternative ist als Funktionsmodul eine Trägerstruktur für eine teilweise Überdachung des Anhängers, insbesondere als Raum für einen Hund oder zur Überdachung von Lasten, vorgesehen. So kann beispielsweise neben einem im Anhänger verankerten Kindersitz eine Art Tunnel zum Transport eines Hundes vorgesehen sein. Eine solche Konstruktion hat den Vorteil, dass der Hund räumlich vom Kind getrennt transportiert werden kann. Außerdem kommen als Funktionsmodule fest verankerte Elemente zum Sichern von Lasten am Anhänger in Betracht. Eine Sicherung von Lasten kann insbesondere auch beim gleichzeitigen Transport von Kindern wichtig sein, nämlich um zu verhindern, dass ein Kind im gegebenen Fall von hin und her rutschendem oder sogar, beispielsweise bei einem Unfall, herumfliegenden Lastgut getroffen wird.

Als Funktionsmodule oder Bestandteile davon kommen neben Trägern, Pfosten oder Stützen beispielsweise auch flächige Elemente wie beispielsweise Platten oder Wandungen in Betracht.

In einer weiteren bevorzugten Ausgestaltung sind Feder- und/oder Dämpfungselemente, insbesondere im Bereich der Verankerung oder der Pfosten bzw. Stützen eines Funktionsmoduls, angeordnet, mit denen vom Anhänger auf das Funktionsmodul übertragene Stöße gedämpft bzw. abgefedert werden. Eine solche Federung ermöglicht es, beispielsweise Körperaufnahmen für Kinder, Kleinkinder oder Babys abzufedern, auch wenn die Radaufhängung des Anhängers keine eigene Federung oder Dämpfung aufweist.

Es kann von erheblichem Vorteil sein, wenn das Chassis ein Rahmenmodul aufweist, dessen Grundform mit der Grundform eines Basisrahmens des Chassis oder einer Außenkontur einer Wanne des Chassis korreliert, wobei das Rahmenmodul lösbar mit dem Basisrahmen oder der Wanne des Chassis, insbesondere über hierfür vorgesehene Kupplungsstifte oder Rastmittel, verbindbar ist und Mittel zum Befestigen von Anhängeraufbaukomponenten aufweist. Anhängeraufbaukomponenten können hier sämtliche Komponenten sein, die vom Chassis getragen werden und dafür mit dem Chassis verbunden sind. So kann das Rahmenmodul beispielsweise mit einer Hüllstruktur für eine Fahrgastzelle bzw. eine Transportzelle, mit einer oder mehreren eine Transportfläche begrenzenden Wandelementen und/oder mit einer ein- oder mehrteiligen Bodenplatte ausgestattet sein. Mit dem Rahmenmodul ist es möglich, zwei wesentlichen Funktionen des Chassis, nämlich die Aufnahme der Elemente für die Radaufhängung und die Bereitstellung von Verbindungselementen für einzelne oder alle Aufbauten des Anhängers, voneinander zu trennen. Die Funktion der Aufnahme der Elemente für die Radaufhängung wird dann von dem Basisrahmen des Chassis bzw. einer Wanne des Chassis übernommen, während einige oder alle Aufbauten des Anhängers mit dem Rahmenmodul verbunden sind. Durch diese funktionale Auftrennung ist es möglich, einen einheitlichen Basisrahmen mit Radaufhängung in Verbindung mit einer Vielzahl verschiedener Anhängeraufbauten für verschiedene Nutzungsarten zu kombinieren, beispielsweise mit einem Anhängeraufbau für den Transport für Kinder, einem Anhängeraufbau für den Transport von Haustieren oder einem Anhängeraufbau für den Transport von Lasten. Dabei kann es beispielsweise in einer Alternative sinnvoll sein, Chassis-seitige Kupplungselemente zum lösbaren Befestigen von Funktionsmodulen am Basisrahmen oder einer Wanne des Chassis vorzusehen und die Hüllstruktur für eine Fahrgastzelle bzw. eine Transportzelle oder eine oder mehrere eine Transportfläche begrenzende Wandelemente an dem Rahmenmodul zu befestigen. Dies gilt ganz grundsätzlich für alle Arten von Anhänger der eingangsgenannten Art, auch unabhängig davon, ob die Anhänger die erfindungsgemäßen Verankerungselemente und ein oder mehrere darüber am Anhänger verankerte Funktionsmodule aufweisen.

Natürlich können Chassis-seitige Kupplungselemente ebenso am Rahmenmodul befestigt sein, entweder unmittelbar am Rahmenmodul oder mittelbar über mit dem Rahmenmodul verbundene Strukturelemente wie eine Bodenplatte oder am Rahmenmodul befestigte Längs- oder Querträger. Wird das Rahmenmodul zum Bereitstellen der Chassis-seitigen Kupplungselemente verwendet, können in den erfindungsgemäßen Anhänger unterschiedliche Bodenplatten eingesetzt werden, die für verschiedene Einsatzzwecke unterschiedlich ausgestaltet sind, wobei insbesondere die Art und Anordnung der Chassis-seitigen Kupplungselemente an den jeweiligen Einsatzzweck, beispielsweise den Transport von Kindern, Hunden oder Lasten, besonders angepasst sein kann. Wenn das Rahmenmodul eine ein- oder mehrteilige Bodenplatte trägt, ist es auch möglich, den Anhänger auf einfache Weise mit Bodenplatten unterschiedlicher Beschaffenheit auszustatten, die jeweils an den benötigten Einsatzzweck angepasst sind. Aus dem Vorstehenden ergibt sich, dass die Möglichkeit, unterschiedlichste Funktionsmodule an unterschiedlichen Positionen im erfindungsgemäßen Anhänger zu verankern, zu einem erheblich höheren Nutzwert im Vergleich zu bislang bekannten Anhängern führt.

Im Folgenden wird die Erfindung anhand von Figuren, in denen bevorzugte Ausführungsbeispiele der Erfindung dargestellt sind, näher erläutert.

Es zeigen
- Fig. 1: eine vereinfachte Aufsicht auf das Chassis eines ersten Beispiels eines erfindungsgemäßen Anhängers;
- Fig. 2: eine vereinfachte Seitenansicht des Rahmens des in Fig. 1 dargestellten Chassis;
- Fig. 3: eine vereinfachte Aufsicht auf das Chassis eines zweiten Beispiels eines erfindungsgemäßen Anhängers;
- Fig. 4: eine vereinfachte Seitenansicht des Rahmens des in Fig. 3 dargestellten Chassis;
- Fig. 5: eine Skizze zur Verspannung einer Körperaufnahme in einem erfindungsgemäßen Anhänger;
- Fig. 6: eine Skizze zur Verspannung der in Figur 5 gezeigten Körperaufnahme in einer anderen Position;
- Fig. 7: eine Skizze zu einer anderen Anordnung einer Körperaufnahme in einem erfindungsgemäßen Anhänger;
- Fig. 8: eine Skizze zu einer weiteren Anordnung einer Körperaufnahme in einem erfindungsgemäßen Anhänger;
- Fig. 9: eine Skizze zu einer Anordnung noch einer weiteren erfindungsgemäßen Körperaufnahme in einem erfindungsgemäßen Anhänger;
- Fig. 10: eine vereinfachte Ansicht eines erfindungsgemäßen Anhängers mit einer Körperaufnahme und einem daneben angeordneten, abgegrenzten Bereich zum Transport eines Hundes;
- Fig. 11: einen Unterbau eines Fahrradanhängers mit Basisrahmen, Radaufhängung, Rädern und Deichsel;
- Fig. 12: ein Rahmenmodul in seiner Grundform zur Verwendung in Verbindung mit dem in Figur 12 dargestellten Basisrahmen;
- Fig. 13: eine andere Ausführungsform des in Figur 12 dargestellten Rahmenmoduls mit jeweils einer Reling zu beiden Seiten; und
- Fig. 14: eine Ausführungsform des in Figur 13 dargestellten Rahmenmoduls zusammen mit einer Hüllstruktur für eine Fahrgastzelle.

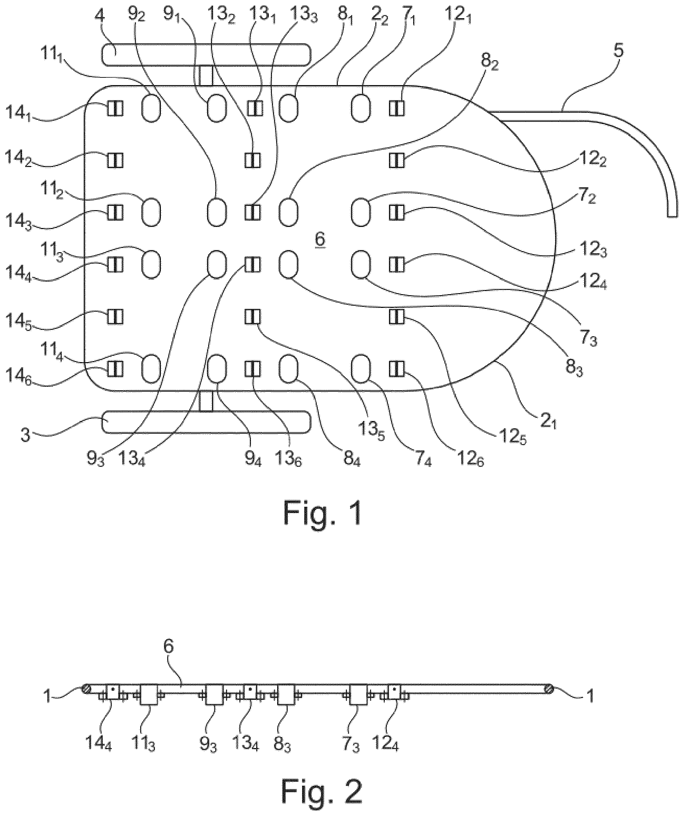

In den Figuren 1 und 2 ist das Chassis eines erfindungsgemäßen zweispurigen Anhängers gezeigt. Das Chassis besteht aus einem umlaufenden Rohrrahmen 1 mit einer in Fahrtrichtung rechten Seite 2a und einer linken Seite 2b, nicht näher dargestellten Mitteln zur mittelbaren bzw. unmittelbaren Befestigung der Räder 3 und 4 am Chassis, und einer am Chassis befestigten Deichsel 5.

Der Boden des Chassis ist hier durch eine durchgehende Bodenplatte 6 definiert, die sich innerhalb des Rahmens des Chassis erstreckt. In die Bodenplatte 6 sind vier Reihen von jeweils vier Chassis-seitigen Kupplungselementen 7₁₋₄, 8₁₋₄, 9₁₋₄, 11₁₋₄, eingelassen. Die Chassis-seitigen Kupplungselemente sind als Hülse so ausgebildet, dass sie hier nicht dargestellte Funktionsmodul-seitige Kupplungselemente ortsfest und verdrehsicher halten können. Der Abstand der Reihen der Chassis-seitigen Kupplungselemente zueinander ist im dargestellten Beispiel etwa gleich. Darauf kommt es aber nicht an. Die Kupplungselemente sind bevorzugt mit einem Schnellverschlusssystem ausgestattet, so dass die Funktionsmodul-seitigen Kupplungselemente von oben eingesetzt werden können, beim Einsetzen in das Chassis-seitige Kupplungselement automatisch verriegeln und sich beispielsweise durch Betätigung eines Entriegelungsknopfes leicht aus der Kupplung lösen lassen. Außerdem sind in der Bodenplatte 6 drei Reihen von jeweils sechs quadratischen Hülsen 12₁₋₆, 13₁₋₆, 14₁₋₆ eingelassen, die quer verlaufende Stege aufweisen. Die quer verlaufenden Stege können einerseits zum Verspannen von Funktionsmodulen am Boden des Chassis dienen, andererseits auch zur Sicherung von Lastgut an der Bodenplatte 6 mit Gurten verwendet werden. Die Hülsen sind in jeder Reihe über die Breite des Anhängers gleichmäßig verteilt. Es befindet sich jeweils eine Reihe von quadratischen Hülsen vor der in Fahrtrichtung vordersten Reihe und hinter der in Fahrtrichtung hintersten Reihe von Chassis-seitigen Kupplungselementen und eine Reihe von quadratischen Hülsen zwischen der in Fahrtrichtung zweiten und dritten Reihe der Chassis-seitigen Kupplungselemente.

Alle Hülsen sind vorzugsweise unten mit einem Boden abgeschlossen, so dass kein Dreck oder Feuchtigkeit von unten eindringen kann. Darüber hinaus kann es eine sinnvolle Ergänzung sein, für jede der Hülsen Einsätze als Deckel vorzusehen, mit denen sie im Falle des Nichtgebrauchs verschlossen werden können.

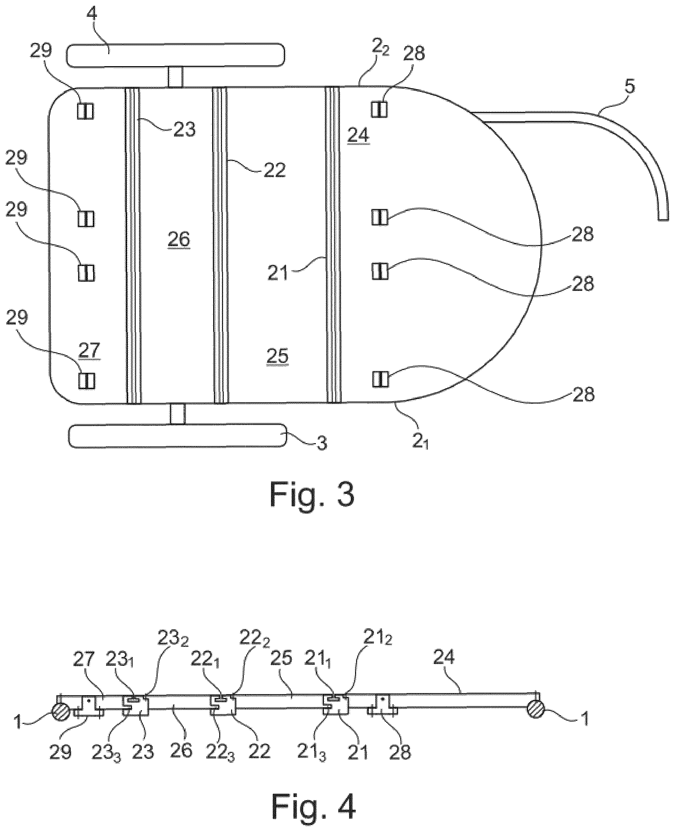

In den Figuren 3 und 4 ist das Chassis eines etwas anderen erfindungsgemäßen zweispurigen Anhängers gezeigt. Es unterscheidet sich von dem der Figuren 1 und 2 im Wesentlichen dadurch, dass anstelle von Hülsen als Chassis-seitigen Kupplungselementen drei quer verlaufende Strangprofile 21 - 23 vorgesehen sind, die jeweils an dem rechtsseitigen und dem linksseitigen Rohr des Chassis befestigt sind. An ihrer Oberseite weisen die Strangprofile 21 - 23 jeweils eine durchgehende, hinterschnittene Nut 21₁ - 23₁ auf, in denen ein oder mehrere Funktionsmodul-seitige Kupplungselemente verankert werden können. Darüber hinaus sind die Strangprofile an ihrer in Fahrtrichtung vorderen Seite mit einem Absatz 21₂ - 23₂ an ihrer oberen Kante und an ihrer in Fahrrichtung hinteren Seite mit einer durchlaufenden Nut 21₃ - 23₃ zur Aufnahme von Bodenplatten 24 - 27 vorgesehen, die zwischen den Strangprofilen bzw. zwischen den Strangprofilen und dem Rohrrahmen 1 des Chassis eingesetzt und jeweils daran befestigt sind. Die Bodenplatten 24 - 27 schließen mit den Oberseiten der Strangprofile 21 - 23 bündig ab und bilden so eine ebene Ladefläche. In die in Fahrtrichtung vordere Bodenplatte 24 sowie die in Fahrtrichtung hintere Bodenplatte 27 sind jeweils eine Reihe von jeweils vier gleichmäßig voneinander beabstandeten, jeweils einen quer verlaufenden Steg aufweisenden Hülsen 28, 29 vorgesehen, die insbesondere dem Verspannen von Funktionselementen oder dem Sichern von Lastgut am Boden des Chassis dienen.

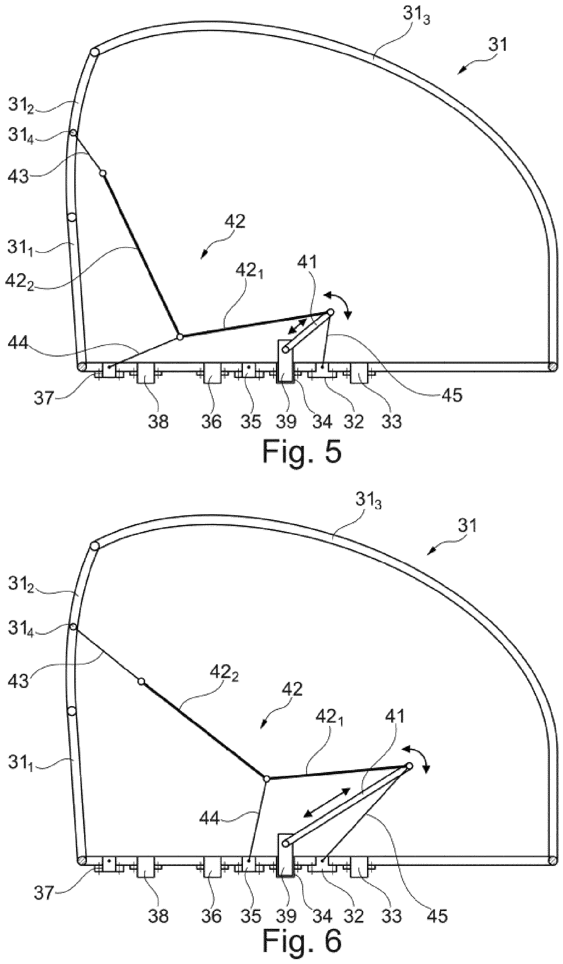

Figur 5 zeigt einen Anhänger mit einem Chassis und einer darauf aufgesetzten, faltbaren Fahrgastzelle 31. Die Fahrgastzelle 31 weist zwei hintere Rahmenelemente 31₁ und 31₂ sowie ein die Fahrgastzelle vorn und oben begrenzendes Rahmenelement 31₃ auf. Das Chassis unterscheidet sich von dem in den Figuren 1 und 2 dargestellten Chassis lediglich in der Anordnung der Reihen quadratischer Hülsen mit Quersteg, mit einer vorderen Reihe quadratischer Hülsen 32 zwischen der ersten und der zweiten Reihe Chassis-seitiger Kupplungselemente 33, 34, einer mittleren Reihe quadratischer Hülsen 35 zwischen der zweiten und der dritten Reihe Chassis-seitiger Kupplungselemente 34, 36 und einer letzten Reihe quadratischer Hülsen 37 hinter der letzten Reihe Chassis-seitiger Kupplungselemente 38. In zwei der Chassis-seitigen Kupplungselemente 34 der zweiten Reihe sind zwei niedrige Pfosten 39 eingesetzt. Die Pfosten weisen an ihrem unteren Ende einen hier nicht dargestellten, mit dem Chassis-seitigen Kupplungselement als Funktionsmodul-seitiges Kupplungselement zusammenwirkenden, lösbaren Schnellverschluss auf. Beide Pfosten 39 tragen einen U-förmigen Bügel 41, der an den Pfosten 39 um eine Achse quer zur Fahrtrichtung verschwenkbar ist. Die freien Enden des U-förmigen Bügels 41 sind teleskopierbar.

Die Pfosten 39 und der Bügel 41 bilden ein Funktionsmodul, das hier Bestandteil einer Körperaufnahme zum Transport eines Kindes oder eines Babys ist. Am Bügel 41 ist das vordere Ende einer Matte 42 für eine Körperaufnahme befestigt. Das hintere, obere Ende dieser Matte 42 ist über spannbare Gurte 43 an einer im hinteren Rahmenelement 31₂ quer verlaufenden Strebe 31₄ verspannt. Im Bereich des Übergangs der Matte 42 von Sitzfläche 42₁ zu Rückenlehne 42₂ ist sie rückwärtig nach unten und hinten mit Abspanngurten 44 verspannt, die an einem oder mehreren Querstegen der Hülsen 37 gegengelagert sind. Schließlich ist die Matte 42 über den Bügel 41 verspannt, dessen Vorderkante über Abspanngurte 45, die an einem oder mehreren Querstegen der Hülsen 32 gegengelagert sind, abgespannt ist. Die hier dargestellte Sitzposition ist vergleichsweise aufrecht, der Winkel zwischen Sitzfläche und Rückenlehne nahe bei 90°.

In Figur 6 ist das in Figur 5 dargestellte Funktionsmodul an gleicher Stelle im Boden des Chassis eingesetzt. Allerdings sind die freien Schenkel des U-förmigen, teleskopierbaren Bügels 41 ausgefahren, so dass die Position der Vorderkante der Sitzfläche in Fahrtrichtung nach vorn und nach oben verschoben ist, ebenso wie der Bereich des Übergangs von Sitzfläche 42₁ zu Rückenlehne 42₂. Die Abspanngurte (44, 45) zum Abspannen dieses Bereichs sind nun an den Querstegen der Hülsen 35 gegengelagert. In dieser Anordnung ergibt sich eine Liegesitzposition, die aufgrund des deutlich größeren Winkels zwischen Sitzfläche und Rückenlehne insbesondere für den Transport von Babys geeignet ist.

Die Körperaufnahme ist vorzugsweise mit hier nicht dargestellten Seitenwandungen versehen, die einem seitlichen Herausrutschen des Kindes bzw. Babys entgegenwirken. Die Seitenwandungen können beispielsweise jeweils aus einem elastischen Textilmaterial bestehen, dessen Unterkante an der Matte und dessen Oberkante mit einem elastischen und/oder längenverstellbaren Gurt verbunden ist, dessen eines Ende an einem vorderen seitlichen Bereich der Seitenkante der Sitzfläche und dessen anderes Ende in einem oberen Bereich der seitlichen Kante der Rückenlehne befestigt ist. Auch ist es im Prinzip möglich, starre seitliche Wandlungen als Funktionsmodule am Boden des Chassis zu verankern.

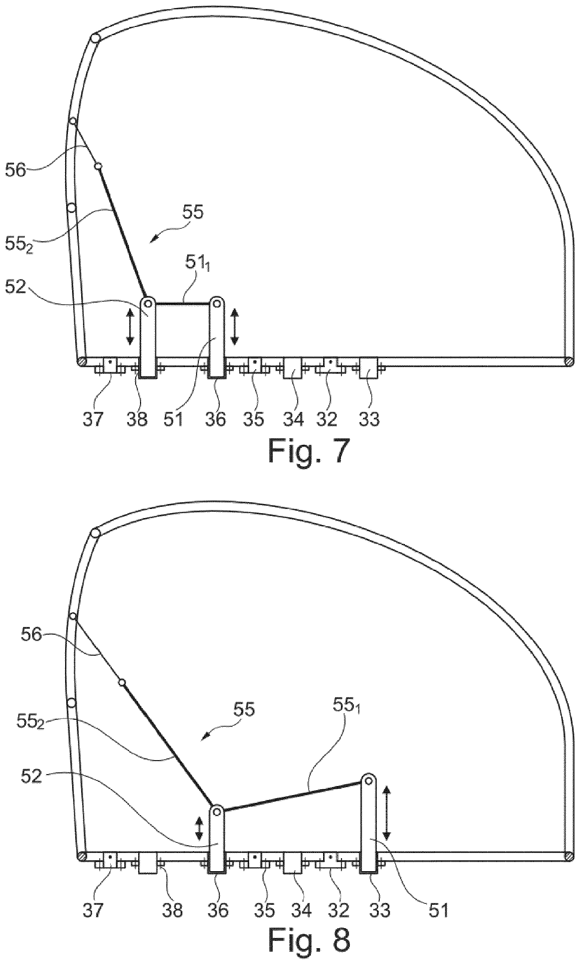

In den Figuren 7 und 8 ist eine andere Möglichkeit dargestellt, mit Funktionsmodulen eine Körperaufnahme in dem Anhänger der Figuren 5 und 6 vorzusehen. Hier werden zwei in ihrer Höhe jeweils verstellbare Pfostenpaare 51, 52 verwendet, an denen jeweils quer verlaufende Gurte (nicht dargestellt) lösbar befestigt sind. Die Pfostenpaare 51, 52 sind in jeweils benachbarte Hülsen der beiden hinteren Reihen der Chassis-seitigen Kupplungselemente 36 und 38 eingesetzt. Die Gurte sind in hier nicht dargestellten, an der Unterseite einer Sitzfläche 55₁ einer die Körperaufnahme bildenden Matte 55 vernähten Gurtführung hindurchgeführt. Der die Rückenlehne 55₂ bildende Teil der Matte 55 ist mithilfe von längenverstellbaren Gurten 56, die an der quer verlaufenden Strebe 31₄ gegengelagert ist, verspannt.

Werden die Pfosten 51, 52, wie in Figur 8 dargestellt, in die Hülsen der ersten und dritten Reihe der Chassis-seitigen Kupplungselemente 33 und 36 eingesetzt, ergibt sich eine Anordnung von Sitzfläche 55₁ und Rückenlehne 55₂, die in einem stupfen Winkel von deutlich mehr als 90° zueinanderstehen. Insbesondere durch Verstellen der Pfosten 51 und 52 lässt sich hier auf einfache Weise eine Liegesitzposition einstellen.

In der Ausführungsform der Figuren 7 und 8 ist die Sitzfläche 55₁ der Matte 55 so lang, dass sie den in Figur 8 gezeigten Abstand zwischen den Pfosten 51 und 52 überspannen kann. In Figur 7 ist der Teil des für die Sitzfläche 55₁ zur Verfügung stehenden Mattenmaterials unter die Sitzfläche 55₁ gefaltet und daran befestigt, beispielsweise mittels eines Klettverschlusses. An der Unterseite des für die Sitzfläche 55₁ zur Verfügung der Sitzfläche sind mehrere quer verlaufende Gurtführungen vorgesehen, so dass die querverlaufenden Gurte je nach Position der Pfosten durch eine passende Gurtführung hindurchgeführt werden kann.

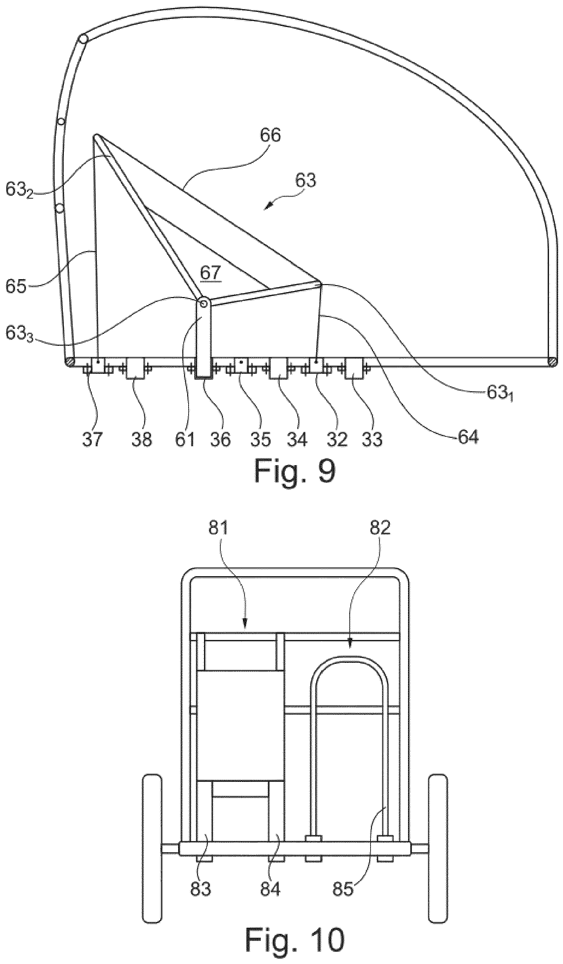

In Figur 9 ist der Anhänger der Figuren 5 bis 8 mit einem weiteren Funktionsmodul dargestellt. Hier besteht das Funktionsmodul aus zwei Pfosten 61, die in Hülsen der dritten Reihe der Chassis-seitigen Kupplungselemente 36 eingesetzt sind und eine selbsttragende Körperaufnahme 63 stützen. Die selbsttragende Körperaufnahme weist zwei U-förmige Rahmenteile 63₁, 63₂ auf, die die durch eine Matte gebildete Sitzfläche und Rückenlehne der Körperaufnahme 63 einrahmen und über Drehgelenke 63₃, miteinander verbunden sind die gegebenenfalls feststellbar ausgebildet sein können, aber nicht müssen. Im Bereich der Drehgelenke 63₃ sind an der Körperaufnahme 63 Kupplungen vorgesehen, mit denen die Körperaufnahme auf die Pfosten 61 aufgesetzt und mit diesen sicher verbunden werden kann. Die Vorderseite des Rahmenteils 63₁ ist mit einem oder mehreren Spanngurten 64 an einer oder mehreren Hülsen mit Quersteg der ersten Reihe 32 abgespannt, und die Oberseite des Rahmenteils 63₂ mit einem oder mehreren Spanngurten 65 an einer oder mehreren Hülsen mit Quersteg der letzten Reihe 37. Darüber hinaus sind die Vorderseite des Rahmenteils 63₁ und die Oberseite des Rahmenteils 63₂ gegeneinander über seitlich geführte, in ihrer Länge verstellbare Gurte 66 gegeneinander abgestützt. An den Seitenkanten der Matte ist jeweils eine Seitenwandung 67 vorgesehen, die dem Herausrutschen eines Kindes oder Babys aus der Körperaufnahme entgegenwirkt.

Figur 10 zeigt die Anordnung zweier vollkommen unterschiedlicher Funktionsmodule 81, 82 nebeneinander. Funktionsmodul 81 ist ein über Pfosten 83, 84 mit dem Chassis verbundener, in der Fahrgastzelle und am Chassis abgespannter Kindersitz. Das Funktionsmodul 82 daneben ist eine Art Tunnel, der durch U-förmige, im Boden des Chassis verankerte Bügel 85 und einem flexiblen Material, das darüber gezogen ist, gebildet. Der Tunnel kann beispielsweise den Transportbereich für einen Hund gegenüber der Körperaufnahme für ein Kind oder Baby räumlich abgrenzen.

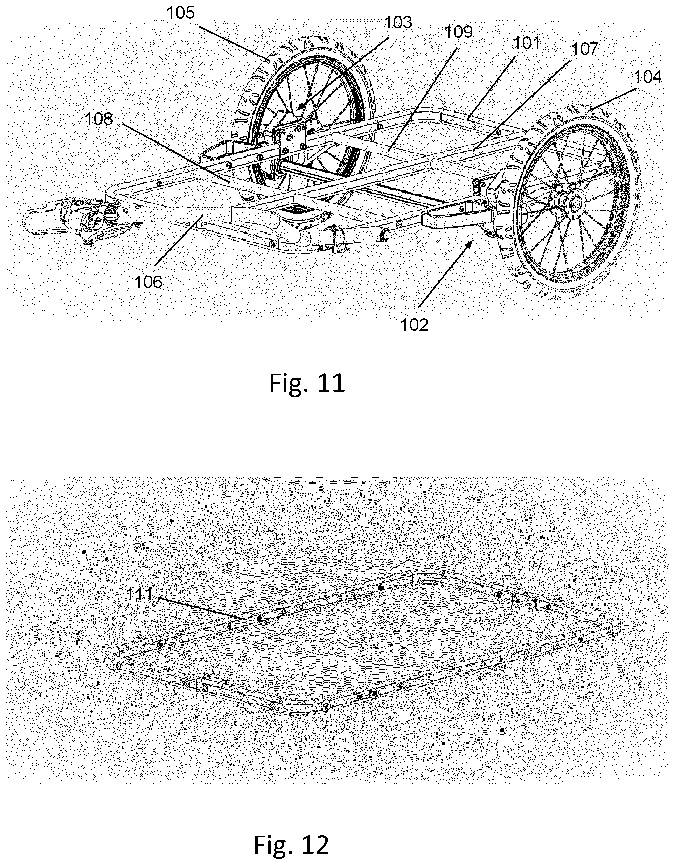

In Figur 11 ist ein erster Teil eines Chassis dargestellt, der durch einen vierseitigen Basisrahmen 101, an dem eine Radaufhängung 102, 103 samt Räder 104, 105 sowie eine Deichsel 106 befestigt sind. Der Basisrahmen 101 ist durch einen zentralen Längsträger 107 und zwei Querträger 108, 109 ausgesteift. Der Basisrahmen kann mit hier nicht dargestellten Chassis-seitigen Kupplungselementen, wie beispielsweise in den Figuren 1 und 3 dargestellt, ausgestattet sein.

Figur 12 zeigt einen weiteren vierseitigen Rahmen als Rahmenmodul 111, das ebenso Bestandteil des Chassis ist und dessen Kontur der des Basisrahmens 101 entspricht. Das Rahmenmodul 111 kann auf den Basisrahmen 101 der Figur 11 aufgesetzt und über hier nicht dargestellte Verbindungselemente, beispielsweise über Steckkupplungen oder feststellbare Klammern oder dergleichen, daran befestigt werden.

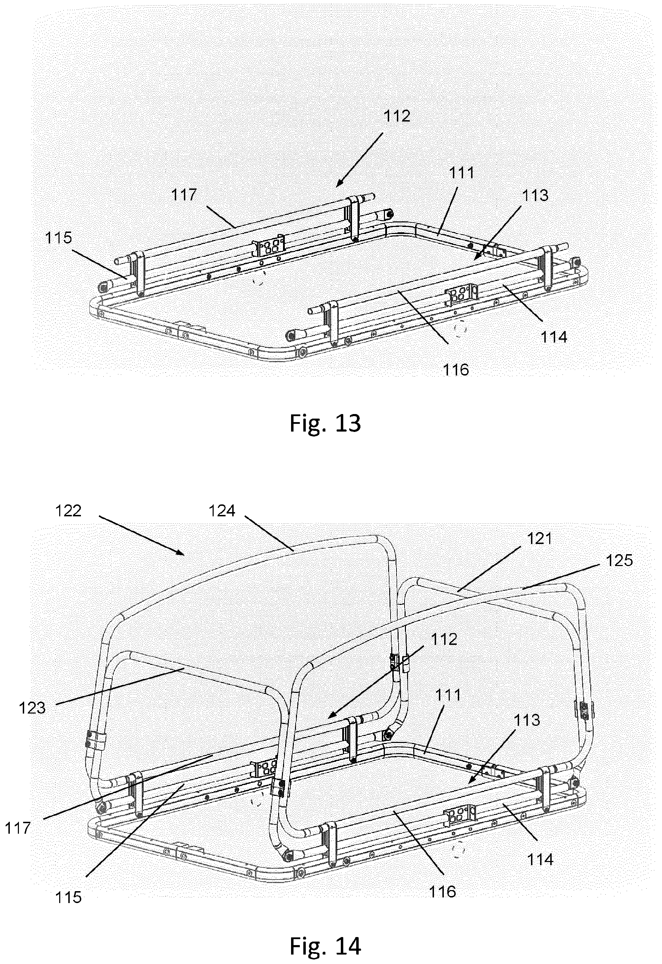

Das Rahmenmodul 111 ist insbesondere zur Befestigung von Anhängeraufbauten am Chassis gedacht. So zeigt Figur 13 ein Beispiel für ein Rahmenmodul 101, an dessen Längsseiten jeweils eine Reling 112, 113 befestigt ist, mithilfe derer beispielsweise eine Last auf dem Anhänger gesichert werden kann. Jede Reling 112, 113 weist eine untere Strebe 114, 115 und eine obere Strebe 116, 117 auf, wobei im dargestellten Beispiel die unteren Streben 114, 115 in Längsrichtung des Anhängers vorn und hinten über die oberen Streben 116, 117 überstehen.

Figur 14 zeigt das Rahmenmodul 111 der Figur 13. An den hinteren Enden der unteren Streben 114, 115 ist ein hinteres Rahmenteil 121 einer Fahrgast- oder Transportzelle 122 angelenkt, das aus der dargestellten aufrechten Position in eine im wesentliche horizontale Position nach innen verschwenkt werden kann. Das gleiche gilt für einen vorderen Rahmenteil 123 der Fahrgastzelle 122, der an den vorderen Enden der unteren Streben 114, 115 angelenkt ist. Auf die vorderen und hinteren Enden der oberen Streben 116, 117 sind seitliche Rahmenteile 124, 125 aufgesteckt, die aus ihrer dargestellten aufrechten Position seitlich ebenso in eine im Wesentlichen horizontale Position nach innen verschwenkt werden können, so dass alle Rahmenteile aufeinander gelegt werden können. Dadurch, dass die vorderen und hinteren Rahmenteile 121, 123 an den überstehenden unteren Streben 114, 115 angelenkt sind, sind sie in Fahrtrichtung vor und hinter den seitlichen Rahmenteilen angeordnet, das muss aber nicht so sein. Die aneinander anliegenden, im Wesentlichen aufrechten Streben benachbarter Rahmenteile sind über Clips 126, 127, 128, 129 lösbar miteinander verbunden.

Die Rahmenteile 121, 123, 124 und 125 können ganz oder teilweise mit einem Stoff oder einem anderen flexiblen Material bespannt sein, so dass die Fahrgast- bzw. Transportzelle teilweise oder ganz umschlossen ist.

**Bezugszeichenliste**

| | | | |
|---|---|---|---|
| 1 | Rohrrahmen | 36 | Reihe Chassis-seitiger Kupplungselemente |
| 2₁ | rechte Seite in Fahrtrichtung | | |
| 2₂ | linke Seite in Fahrtrichtung | 37 | Reihe quadratischer Hülsen |
| 3 | Rad | 38 | Reihe Chassis-seitiger Kupplungselemente |
| 4 | Rad | | |
| 5 | Deichsel | 39 | Pfosten |
| 6 | Bodenplatte | 41 | U-förmiger Bügel |
| 7 | Kupplungselement | 42 | Matte |
| 8 | Kupplungselement | 42₁ | Sitzfläche |
| 9 | Kupplungselement | 42₂ | Rückenlehne |
| | | 43 | Abspanngurte |
| 11 | Kupplungselement | 44 | Abspanngurte |
| 12 | Hülsen | 45 | Abspanngurte |
| 13 | Hülsen | | |
| 14 | Hülsen | 51 | Pfosten |
| | | 52 | Pfosten |
| 21 | Strang profil | 55 | Matte |
| 22 | Strangprofil | 55₁ | Sitzfläche |
| 23 | Strangprofil | 55₂ | Rückenlehne |
| 24 | Bodenplatte | 56 | längenverstellbare Gurte |
| 25 | Bodenplatte | | |
| 26 | Bodenplatte | 61 | Pfosten |
| 27 | Bodenplatte | 63 | selbsttragende Körperaufnahme |
| | | 63₁ | U-förmiger Rahmenteil |
| 31 | Fahrgastzelle | 63₂ | U-förmiger Rahmenteil |
| 31₁ | Rahmenelement | 633 | Drehgelenk |
| 31₂ | Rahmenelement | 64 | Spanngurt |
| 31₃ | Rahmenelement | 65 | Spanngurt |
| 31₄ | Strebe | 66 | Gurte |
| 32 | Reihe quadratischer Hülsen | 67 | Seitenwandung |
| 33 | Reihe Chassis-seitiger Kupplungselemente | 81 | Funktionsmodul |
| 34 | Reihe Chassis-seitiger Kupplungselemente | 82 | Funktionsmodul |
| | | 83 | Pfosten |
| 35 | Reihe quadratischer Hülsen | 84 | Pfosten |
| | | 85 | U-förmiger Bügel |
| 101 | vierseitiger Basisrahmen | | |
| 102 | Radaufhängung | | |
| 103 | Radaufhängung | | |
| 104 | Rad | | |
| 105 | Rad | | |
| 106 | Deichsel | | |
| 107 | Längsträger | | |
| 108 | Querträger | | |
| 109 | Querträger | | |
| 111 | Rahmenmodul | | |
| 112 | Reling | | |
| 113 | Reling | | |
| 114 | untere Strebe | | |
| 115 | untere Strebe | | |
| 116 | obere Strebe | | |
| 117 | obere Strebe | | |
| 121 | hinteres Rahmenteil | | |
| 122 | Fahrgast- oder Transportzelle | | |
| 123 | vorderes Rahmenteil | | |
| 124 | seitliches Rahmenteil | | |
| 125 | seitliches Rahmenteil | | |
| 126 | Clip | | |
| 127 | Clip | | |
| 128 | Clip | | |
| 129 | Clip | | |

## Patentansprüche

1. Anhänger für ein unmotorisiertes oder mit einem Hilfsmotor angetriebenes Zugfahrzeug, insbesondere für ein Fahrrad oder ein Pedelec, mit einem Chassis und mindestens einem sich mindestens quer zur Längsachse des Anhängers erstreckenden Funktionsmodul (81, 82), das mindestens einen Träger aufweist, wobei Verankerungselemente zur lösbaren ortsfesten Verankerung des Funktionsmoduls (81, 82) am Chassis vorgesehen sind, **dadurch gekennzeichnet, dass** die Verankerungselemente so angeordnet und ausgebildet sind, dass sie ein lösbares Befestigen eines oder mehrerer voneinander unabhängiger Funktionsmodule (81, 82) an unterschiedlichen Positionen am Chassis ermöglichen, wobei mindestens eines, vorzugsweise mindestens zwei der Verankerungselemente zwischen einem rechten und einem linken inneren Rand des Chassis angeordnet sind.

2. Anhänger nach Anspruch 1, **dadurch gekennzeichnet, dass** die Verankerungselemente ein Befestigen eines oder mehrerer voneinander unabhängiger Funktionsmodule (81, 82) an unterschiedlichen Positionen quer zur Längsachse des Chassis ermöglichen, wobei vorzugsweise zwei im Chassis nebeneinander verankerbare Funktionsmodule (81, 82) vorgesehen sind.

3. Anhänger nach einem der vorstehenden Ansprüche, **dadurch gekennzeichnet, dass** mindestens drei in einer Richtung quer zur Längsachse des Anhängers voneinander beabstandete Verankerungselemente vorgesehen sind.

4. Anhänger nach einem der vorstehenden Ansprüche, **dadurch gekennzeichnet, dass** Verankerungselemente in einem Bereich zwischen dem vorderen Ende und dem hinteren Ende des Chassis, insbesondere einem mittleren Drittel, gemessen über die Länge des Anhängers, oder in Längsrichtung des Anhängers auf Höhe der Radachsen angeordnet sind.

5. Anhänger nach einem der vorstehenden Ansprüche, **dadurch gekennzeichnet, dass** mindestens eines der Verankerungselemente auf Höhe eines Bodens des Chassis angeordnet ist.

6. Anhänger nach einem der vorstehenden Ansprüche, **dadurch gekennzeichnet, dass** mindestens eines der Verankerungselemente mindestens ein Chassis-seitiges Kupplungselement (7, 8, 9, 11, 33, 34, 36, 38) und mindestens ein Funktionsmodul-seitiges Kupplungselement aufweist.

7. Anhänger nach Anspruch 6, **gekennzeichnet durch** mindestens eine Steckkupplung als Verankerungselement.

8. Anhänger nach Anspruch 6 oder 7, **gekennzeichnet durch** eine am Chassis vorgesehene, ein- oder mehrteilige Bodenplatte (6, 24, 25, 26, 27), an bzw. in der mindestens ein Chassis-seitiges Kupplungselement (7, 8, 9, 11, 33, 34, 36, 38) angeordnet und insbesondere verankert ist.

9. Anhänger nach Anspruch 10, **dadurch gekennzeichnet, dass** die Bodenplatte lösbar am Chassis, insbesondere mithilfe von Kupplungsstiften oder Rastmitteln, oder am Rahmenmodul befestigt ist.

10. Anhänger nach einem der Ansprüche 6 bis 9, **gekennzeichnet durch** mindestens eine am Chassis befestigte, insbesondere quer zur Längsachse des Anhängers verlaufende Schiene als Chassis-seitiges Kupplungselement, insbesondere eine Profilschiene, die mit einem bzw. mehreren Funktionsmodul-seitigen Kupplungselementen eines oder mehrerer Funktionsmodule (81, 82) zusammenwirken kann.

11. Anhänger nach einem der vorstehenden Ansprüche, **dadurch gekennzeichnet, dass** die Verankerungselemente das Verankern eines Funktionsmoduls (81, 82) im Wesentlichen von oben ermöglichen.

12. Anhänger nach einem der vorstehenden Ansprüche, **dadurch gekennzeichnet, dass** mindestens ein mit einem Verankerungselement verbundener Pfosten (39, 51, 52, 61 83, 84) vorgesehen ist, der Bestandteil eines Funktionsmoduls (81, 82) ist oder als Stütze eines Funktionsmoduls (81, 82) dient.

13. Anhänger nach Anspruch 12, **dadurch gekennzeichnet, dass** mehrere Pfosten (39, 51, 52, 61 83, 84) vorgesehen sind, die den Träger eines Funktionsmoduls stützen, wobei der Träger insbesondere Bestandteil eines Rahmens des Funktionsmoduls (81, 82) ist.

14. Anhänger nach Anspruch 12 oder 13, **dadurch gekennzeichnet, dass** mindestens ein Funktionsmodul (81, 82) eine sich selbst tragende Körperaufnahme (63) für ein Kind und/oder ein Baby aufweist, wobei die Körperaufnahme (63) vorzugsweise einen Rahmen aufweist, der im Übergang zwischen einer Rumpfstütze und einer Sitzfläche mit einem oder mehreren, gegebenenfalls feststellbaren Gelenken (63₃) ausgebildet ist.

15. Anhänger nach einem der vorstehenden Ansprüche, **dadurch gekennzeichnet, dass** mindestens ein Funktionsmodul (81) mindestens ein Teil einer im Anhänger verspannten Körperaufnahme für ein Kind und/oder ein Baby ist und insbesondere mindestens ein Rahmenelement für eine Sitzfläche (42₁) der Körperaufnahme aufweist.

16. Anhänger nach Anspruch 15, **dadurch gekennzeichnet, dass** das Rahmenelement ein an mindestens einer Stütze gehaltener Querträger ist, wobei die mindestens eine Stütze teleskopierbar und/oder um eine horizontale, quer zur Längsrichtung des Anhängers verlaufende Achse schwenkbar ist.

17. Anhänger nach einem der vorstehenden Ansprüche, **gekennzeichnet durch** mindestens einen auf Höhe des Bodens des Chassis angeordneten Steg als Gegenlager für Abspanngurte (44, 45) zum Verspannen von Funktionsmodulen (81, 82).

18. Anhänger nach einem der vorstehenden Ansprüche, **gekennzeichnet durch** Feder- und/oder Dämpfungselemente, die insbesondere im Bereich der Verankerung oder der Pfosten eines Funktionsmoduls (81, 82) angeordnet sind, mit denen vom Anhänger auf das Funktionsmodul (81, 82) übertragene Stöße gedämpft bzw. abgefedert werden.

19. Anhänger nach einem der vorstehenden Ansprüche, **dadurch gekennzeichnet, dass** mindestens ein Funktionsmodul (82) eine Trägerstruktur für eine teilweise Überdachung des Anhängers, insbesondere als Raum für einen Hund oder zur Überdachung von Lasten, aufweist.

20. Anhänger für ein unmotorisiertes oder mit einem Hilfsmotor angetriebenes Zugfahrzeug, insbesondere für ein Fahrrad oder ein Pedelec, mit einem Chassis, insbesondere nach einem der vorstehenden Ansprüche, **dadurch gekennzeichnet, dass** das Chassis ein Rahmenmodul (111) aufweist, dessen Grundform mit der Grundform eines Basisrahmens (101) des Chassis oder einer Außenkontur einer Wanne des Chassis korreliert, wobei das Rahmenmodul (111) lösbar mit dem Basisrahmen (101) oder der Wanne des Chassis, insbesondere über hierfür vorgesehene Kupplungsstifte oder Rastmittel, verbindbar ist und Mittel zum Befestigen von Anhängeraufbaukomponenten aufweist.

21. Anhänger nach Anspruch 20, **dadurch gekennzeichnet, dass** das Rahmenmodul eine Hüllstruktur für eine Fahrgastzelle bzw. eine Transportzelle, eine oder mehrere eine Transportfläche begrenzende Wandelemente und/oder mit einer ein- oder mehrteiligen Bodenplatte ausgestattet ist.
